# EUROPEAN PATENT APPLICATION

(11) **EP 3 648 240 A1**
(43) Date of publication of application: **06.05.2020**
(21) Application number: 18823000.7
(22) Date of filing: 27.06.2018
(51) Int. Cl.: H01M 10/613

(54) **LITHIUM-ION POWER BATTERY**

(30) Priority: 28.06.2017 CN 201710503558; 28.06.2017 CN 201710503601; 28.06.2017 CN 201710503721
(71) Applicant: Changsha Junengchong New Energy Co., Ltd, Changsha, Hunan 410205 (CN)
(72) Inventor: QIU, Boqian, Changsha Hunan 410205 (CN)
(74) Representative: Zaboliene, Reda
(86) International application number: PCT/CN2018/093106
(87) International publication number: WO 2019/001468

(57) **Abstract**

A lithium-ion power battery includes a battery cell, a metallic casing for receiving the battery cell, an electrolyte injected into the metallic casing, and a top cover connected to the metallic casing. Heat conducting and collecting bodies are formed on at least one of the positive electrode plate and the negative electrode plate. Each heat conducting and collecting body is a portion of the positive current collector not coated by the positive active material layer or a portion of the negative current collector not coated by the negative active material layer. At least two of the heat conducting and collecting bodies are stacked together to form a heat converging path, which being configured to transmit heat energy into or out of the battery cell. A fluid-containing pipe is connected to the at least one heat converging path. A connector is disposed at each of an inlet and an outlet of the fluid-containing pipe, and the connector protrudes. The present disclosure can prevent the temperature of the battery from being too high or too low. Thus, the temperature can be controlled, and the service life of the battery can be increased.

## Description

### FIELD

The subject matter herein generally relates to lithium-ion batteries, and more particularly, to a lithium-ion power battery.

### BACKGROUND

Traffic on the roads brings pressure on the energy crisis and environmental pollution, thus it is urgent to develop and research vehicles powered by efficient, clean and safe energy to achieve energy conservation and emission reduction. Lithium-ion batteries have become the best candidates for power systems of the new energy vehicles because of high specific energy, no pollution, and no memory effect of the lithium-ion batteries. However, the lithium-ion batteries are very sensitive to temperature, and efficient discharge and good performance of the battery pack can be only obtained within a suitable temperature range. Operating at an elevated temperature may cause the lithium-ion battery to age faster and increase its thermal resistances faster. Furthermore, the cycling time becomes less, the service life becomes shorter, and even thermal runaway problems occur at an elevated operating temperature. However, operating at too low a temperature may lower the conductivity of the electrolyte and the ability to conduct active ions, resulting an increase of the impedance, and a decrease in the capacity of the lithium-ion batteries.

Conventionally, the cell is positioned to improve the fluid flow path and increase the heat dissipation. The battery casing may also be improved by replacing the aluminum alloy shell material with the composite of thermoelectric material and aluminum, and by adding a plurality of heat dissipating ribs to the side of the battery casing. The electrode plate may also be extended into the electrolyte to transmit heat energy to the battery casing through the electrolyte and then to the outside environment. Although some heat is dissipated, the heat dissipation efficiency is generally low because the heat cannot be directly discharged from the electrode plates, the main heat generating component, to the outside environment. Therefore, a new design of a lithium-ion power battery is desired.

### SUMMARY

To overcome the above shortcomings, the present disclosure provides a lithium-ion power battery, which can prevent the temperature of the battery from being too high or too low. Thus, the temperature can be controlled, and the service life of the battery can be increased.

The present disclosure provides a lithium-ion power battery.

The lithium-ion power battery includes a battery cell, a metallic casing for receiving the battery cell, an electrolyte injected into the metallic casing, and a top cover connected to the metallic casing. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A fluid-containing pipe is disposed on or connected to the heat converging path. A connector is disposed at each of an inlet and an outlet of the fluid-containing pipe. The connector protrudes. Since the heat conducting and collecting bodies are integrally formed with the positive electrode plate and the negative electrode plate, the manufacturing process is simplified, and the manufacturing efficiency is increased. By stacking the heat conducting and collecting bodies to form the heat converging path and heating or cooling the heat converging path through the fluid-containing pipe, the internal temperature of the battery is increased or decreased, thereby maintaining the temperature of the battery within a suitable range. Thus, the working efficiency and the service life of the battery are increased, and potential safety hazards are avoided. The connector is disposed at each of an inlet and an outlet of the fluid-containing pipe. The protruding connector can facilitate the installation of the fluid-containing pipe.

The present disclosure further provides a lithium-ion power battery including a battery cell, a metallic casing for receiving the battery cell, an electrolyte injected into the metallic casing, and a top cover connected to the metallic casing. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A fluid-containing main pipe is disposed on the metallic casing or the top cover. A fluid-containing branched pipe is thermally connected to one, two, three, four or more than four battery cells. Since the heat conducting and collecting bodies are integrally formed with the positive electrode plate and the negative electrode plate, the manufacturing process is simplified, and the manufacturing efficiency is increased. By stacking the heat conducting and collecting bodies to form the heat converging path and heating or cooling the heat converging path through the fluid-containing pipe, the internal temperature of the battery is increased or decreased, thereby maintaining the temperature of the battery within a suitable range. Thus, the working efficiency and the service life of the battery are increased, and potential safety hazards are avoided. The fluid-containing main pipe is disposed on the metallic casing or the top cover. The fluid-containing branched pipe is thermally connected to one, two, three, four or more than four battery cells. Thus, the space utilization is increased, and the temperatures among different battery cells can be balanced.

The present disclosure further provides a lithium-ion power battery including a battery cell, a metallic casing for receiving the battery cell, an electrolyte injected into the metallic casing, and a top cover connected to the metallic casing. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and two negative active material layers coated on the negative current collector. The positive electrode plate includes a positive current collector and two positive active material layers coated on the positive current collector. Heat conducting and collecting bodies are formed on the positive electrode plate and the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A fluid-containing pipe is disposed on the heat converging path of each battery cell. A heat exchanging device is disposed on the heat converging path. Since the heat conducting and collecting bodies are integrally formed with the positive electrode plate and the negative electrode plate, the manufacturing process is simplified, and the manufacturing efficiency is increased. By stacking the heat conducting and collecting bodies to form the heat converging path and heating or cooling the heat converging path through the fluid-containing pipe. The heat exchanging device disposed in the electrolyte. The heat exchanging device can further be inserted into the electrolyte in the metallic casing. As such, the heat energy can be conducted between the heat converging path and the electrolyte. Thus, the temperature of the battery is controlled, thereby preventing the temperature of the battery from being too high or too low and maintaining the temperature of the battery within a suitable range.

The at least two heat conducting and collecting bodies are connected to form the heat converging path by welding. The heat conducting and collecting bodies being connected to form the heat converging path by welding allows the connection to be stable, which can reduce the weight and increase the energy density of the battery.

The welding can be ultrasonic welding, laser welding, or friction welding.

The heat conducting and collecting bodies can also be connected together to form the heat converging path by bolting or riveting. The heat conducting and collecting bodies being connected to form the heat converging path by bolting or the riveting will not cause damages to the separator.

The heat conducting and collecting bodies are bent towards each other before connected together to form the heat converging path. Therefore, the heat absorbed by the heat conducting and collecting bodies is converged, which facilitates cooling or heating of the battery.

The heat conducting and collecting bodies can be bent to be inclined with the positive electrode plate or the negative electrode plate by an angle between 0 degree to 90 degrees. Therefore, the heat absorbed by the heat conducting and collecting bodies is converged, which facilitates cooling or heating of the battery.

The entirety of the heat conducting and collecting bodies can be bent toward a single direction to form the heat converging path, which facilitates the connection of the heat conducting and collecting bodies and facilitates cooling or heating of the battery.

The heat conducting and collecting bodies can also be bent toward opposite directions to form the heat converging path.

A portion of the heat conducting and collecting bodies are bent, and the portion is connected to the remaining portion of the heat conducting and collecting bodies, the remaining portion of the heat conducting and collecting bodies is straight. This facilitates the connection of the heat conducting and collecting bodies and facilitates cooling or heating of the battery.

The portion of the heat conducting and collecting bodies is bent towards a single direction, which can simplify the manufacturing process.

The portion of the heat conducting and collecting bodies can also bent towards opposite directions, which can improve the contact effect therebetween and facilitates cooling or heating of the battery.

At least a portion of the heat conducting and collecting bodies defines a plurality of holes, which can pass through the heat conducting and collecting body and have a 3D internal structure. At least a portion of the heat conducting and collecting bodies can also define a concave and convex surface. This can increase the surface area of the heat conducting and collecting bodies and facilitates cooling or heating of the battery.

At least one of the heat conducting and collecting bodies, which define a plurality of holes, can also be disposed among the other heat conducting and collecting bodies. The holes can pass through the heat conducting and collecting body and have a mesh structure or a 3D internal structure. The heat conducting and collecting body can also define a concave and convex surface. This can increase the surface area of the heat conducting and collecting bodies and facilitates cooling or heating of the battery.

At least one of the heat conducting and collecting bodies, which define a plurality of holes, can also be disposed among the other heat conducting and collecting bodies. The hole can be bend-shaped and pass through the heat conducting and collecting body and have a mesh structure or a 3D internal structure. The heat conducting and collecting body can also define a concave and convex surface. This can increase the surface area of the heat conducting and collecting bodies and facilitates cooling or heating of the battery.

The heat conducting and collecting body can have an insulating layer, an insulating and heat conductive layer, or an insulating film on a surface thereof. As such, a short circuit at the heat conducting and collecting bodies can be avoided. Potential safety hazards can further be avoided.

Furthermore, an insulating layer or an insulating film is disposed on a surface of the fluid-containing pipe. As such, a short circuit at the fluid-containing pipe can be avoided. Potential safety hazards can further be avoided.

The heat conducting and collecting body is protrude from the positive electrode plate and the negative electrode plate, which facilitates the connection of the heat conducting and collecting bodies and conduction and dissipation of the heat energy.

Portions of the heat conducting and collecting body protruding from the positive electrode plate and the negative electrode plate is further inserted into the electrolyte received in the metallic casing. As such, the heat energy from the heat conducting and collecting body can be conducted into the electrolyte and further to the external surface of the battery. Therefore, the heat energy is prevented from being accumulated in the battery due to poor heat conduction of the separator. Furthermore, the heat energy in the electrolyte can further quickly move to the positive and the negative electrode plates, which prevents the temperature of the battery from being too low.

A heat exchanging device is disposed in the electrolyte for heating or cooling the electrolyte. The electrolyte can in turn heat or cool the heat conducting and collecting bodies, thereby maintaining the temperature of the battery within a suitable range.

The heat conducting and collecting body can also be recessed with respect to the positive and the negative electrode plates, which reduces the weight and increase the energy density of the battery.

A thickness of the entirety of the heat conducting and collecting body is same of that of the interconnecting portion between the heat conducting and collecting body and the positive and the negative electrode plates. As such, the heat conducting and collecting body and the electrode plate can have a greatest interconnecting area therebetween in case of a certain size, which results in a best conducting property.

The exposing current collector is parallel to the positive electrode plates and the negative electrode plate, which facilitates the manufacturing process and increases the manufacturing efficiency.

An end of the battery is totally the exposing current collector, which increases the thermal conduction efficiency.

The exposing current collector covers a central portion of the positive active material layer and a central portion the negative active material layer.

A temperature sensor is disposed on the heat converging path, which can sense the temperature of the heat converging path. Thus, the temperature of the heat converging path can be controlled accordingly.

The temperature sensor can be a thin-film temperature sensor, which can precisely sense the temperature, and have a small weight which can increase the energy density of the battery.

The lamination is composite lamination or a bag or a thin lamination.

The positive active material of the positive active material layer is lithium iron phosphate, lithium cobalt oxide, lithium manganate, or a ternary material.

The negative active material of the negative active material layers is carbon, tin-based negative material, transition metal nitride containing lithium or alloy.

The insulating layer can be disposed at an inner surface of the fluid-containing pipe or a joint. As such, a short circuit at the fluid-containing pipe can be avoided. Potential safety hazards can further be avoided.

The insulating layer can also be disposed at an outer surface of the fluid-containing pipe. As such, a short circuit at the fluid-containing pipe can be avoided. Potential safety hazards can further be avoided.

A plurality of fins (not shown) can also be disposed in the fluid-containing pipe for conducting heat.

The fluid-containing pipe can also be a heat pipe comprising a pipe casing and a wick structure in the pipe casing, which can increase the heating or cooling efficiency.

A plurality of fins can be disposed in the fluid-containing pipe for conducting heat of the fluid-containing pipe.

### BRIEF DESCRIPTION OF THE DRAWINGS

FIG. 1 is a schematic view of a first embodiment according to the present disclosure.
FIG. 2 is a schematic view of a battery cell of FIG. 1.
FIG. 3 is a cross-sectional view of the battery cell of FIG. 1.
FIG. 4 is a cross-sectional view of the battery cell.
FIG. 5 is a cross-sectional view of a fifth embodiment according to the present disclosure.
FIG. 6 is a cross-sectional view of a sixth embodiment according to the present disclosure.
FIG. 7 is a cross-sectional view of a seventh embodiment according to the present disclosure.
FIG. 8 is a cross-sectional view of an eighth embodiment according to the present disclosure.
FIG. 9 is a cross-sectional view of a ninth embodiment according to the present disclosure.
FIG. 10 is a cross-sectional view of a tenth embodiment according to the present disclosure.
FIG. 11 is a cross-sectional view of an eleventh embodiment according to the present disclosure.
FIG. 12 is a cross-sectional view of a twelfth embodiment according to the present disclosure.
FIG. 13 is a cross-sectional view of a thirteenth embodiment according to the present disclosure.

### DETAILED DESCRIPTION

Implementations of the disclosure will now be described, by way of embodiments only, with reference to the drawings.

The present disclosure provides a first embodiment of a lithium-ion power battery comprising a battery cell, a metallic casing for receiving the battery cell, an electrolyte injected into the metallic casing, and a top cover connected to the metallic casing. The battery cell comprises a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate comprises a positive electrode tab. The negative electrode plate comprises a negative electrode tab. The top cover comprises a positive terminal post electrically connected to the positive terminal tab and a negative terminal post electrically connected to the negative electrode tab. The positive electrode plate comprises a positive current collector and two positive active material layers coated on the positive current collector. The negative electrode plate comprises a negative current collector and two negative active material layers coated on the negative current collector. Heat conducting and collecting bodies are formed on the positive electrode plate and the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A fluid-containing pipe is disposed on or connected to the heat converging path. A connector is disposed at each of an inlet and an outlet of the fluid-containing pipe. The connector protrudes.

The present disclosure further provides a lithium-ion power battery including a battery cell, a metallic casing for receiving the battery cell, an electrolyte injected into the metallic casing, and a top cover connected to the metallic casing. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and negative active material layers coated on the negative current collector. The positive electrode plate includes a positive current collector and positive active material layers coated on the positive current collector. Heat conducting and collecting bodies are formed on the positive electrode plate and the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A fluid-containing main pipe is disposed on the metallic casing or the top cover. A fluid-containing branched pipe is thermally connected to one, two, three, four or more than four battery cells.

The present disclosure further provides a lithium-ion power battery including a battery cell, a metallic casing for receiving the battery cell, an electrolyte injected into the metallic casing, and a top cover connected to the metallic casing. The battery cell includes a positive electrode plate, a negative electrode plate, and a separator spaced between the positive electrode plate and the negative electrode plate. The positive electrode plate, the separator, and the negative electrode plate are sequentially laminated together and then wound together to form the battery cell. The positive electrode plate includes a positive electrode tab. The negative electrode plate includes a negative electrode tab. The top cover includes a positive terminal post electrically connected to the positive terminal tab and a negative terminal post electrically connected to the negative electrode tab. The negative electrode plate includes a negative current collector and two negative active material layers coated on the negative current collector. The positive electrode plate includes a positive current collector and two positive active material layers coated on the positive current collector. Heat conducting and collecting bodies are formed on the positive electrode plate and the negative electrode plate. Each heat conducting and collecting body is a portion of the positive current collector not coated by the positive active material layer or a portion of the negative current collector not coated by the negative active material layer. The at least two heat conducting and collecting bodies overlap and are stacked together to form at least one heat converging path, which is configured to transmit heat energy into or out of the battery cell. A fluid-containing pipe is disposed on the heat converging path of each battery cell. A heat exchanging device is disposed on the heat converging path.

In the drawings, 1 represents the positive electrode tab, 2 represents the negative electrode tab, 3 represents the positive terminal post, 4 represents the negative terminal post, 5 represents the heat conducting and collecting body, 6 represents the fluid-containing pipe, 7 represents the battery cell, 8 represents the heat exchanging device, 9 represents the metallic casing, 10 represents the top cover, 11 represents the heat converging path.

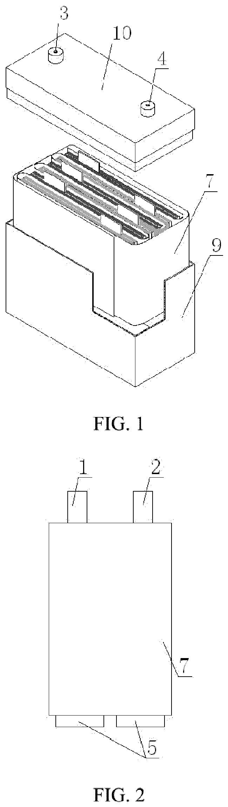

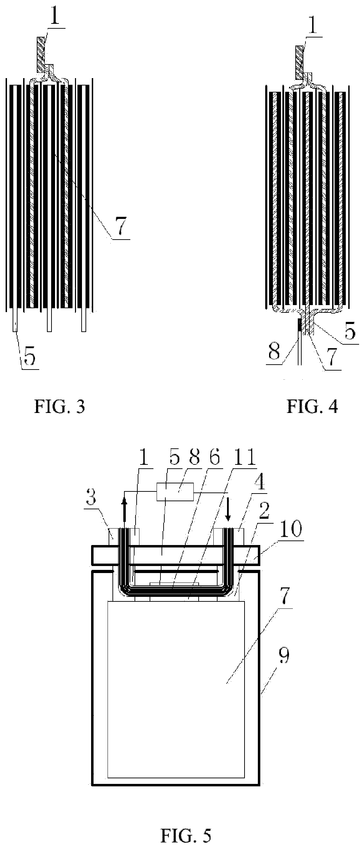

Referring to FIG. 1, the positive electrode tab and the negative electrode tab are disposed at the same end. The conducting and collecting bodies 5 are connected to the positive electrode plate and the negative electrode plate, and are dispose at an end opposite to the electrode tabs, that is, at the bottom end of the metallic casing 9. The positive electrode tab 1 is electrically connected to the positive terminal post 3 in the top cover 10. The negative electrode tab 1 is electrically connected to the negative terminal post 4 in the top cover 10. FIG. 2 is a schematic view of a battery cell. FIG. 3 is a cross-sectional view of FIG. 2. The heat conducting and collecting bodies 5 are integrally formed with the current collector FIGS. 2 and 3. FIG. 4 illustrates that the heat conducting and collecting bodies 5 are connected to form the heat converging path 11.

Referring to FIG. 5, the positive electrode tab and the negative electrode tab are disposed at the same end. The heat conducting and collecting bodies 5 are disposed between the positive electrode plate and the negative electrode plate. The heat conducting and collecting bodies 5 are stacked together to form the heat converging path 11. The fluid-containing pipe 6 is disposed on the heat converging path 11. The fluid-containing pipe 6 is inserted into the center the negative terminal post 4 and exits from the positive terminal post 3. The pipe hole of the fluid-containing pipe 6 are disposed at the positive terminal post 3 and the negative terminal post 4. In another embodiment, the fluid-containing pipe 6 can also be inserted into the positive terminal post 3 and exits from the negative terminal post 4. A heat exchanging device 8 outside the casing 9 and the fluid-containing pipe 6 cooperatively form a complete energy cycle.

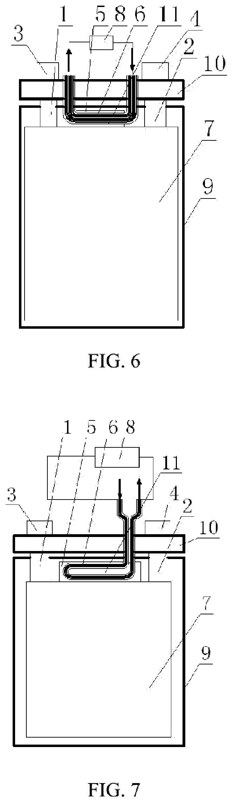

Referring to FIG. 6, the positive electrode tab and the negative electrode tab are disposed at the same end. The heat conducting and collecting bodies 5 are disposed between the positive electrode plate and the negative electrode plate. The heat conducting and collecting bodies 5 are stacked together to form the heat converging path 11. The fluid-containing pipe 6 is disposed on the heat converging path 11. The fluid-containing pipe 6 is inserted into a side of the top cover 10, and exits from another side of the top cover 10. The heat exchanging device 8 outside the casing 9 and the fluid-containing pipe 6 cooperatively form a complete energy cycle.

Referring to FIG. 7, the positive electrode tab and the negative electrode tab are disposed at the same end. The heat conducting and collecting bodies 5 are disposed between the positive electrode plate and the negative electrode plate, and integrally formed with the negative electrode plate. The heat conducting and collecting bodies 5 are stacked together to form the heat converging path 11. The fluid-containing pipe 6 is disposed on the heat converging path 11. The fluid-containing pipe 6 is inserted into and exits from a port of the top cover 10. The inlet and the outlet of the fluid-containing pipe 6 are disposed at the same port. The heat exchanging device 8 outside the casing 9 and the fluid-containing pipe 6 cooperatively form a complete energy cycle.

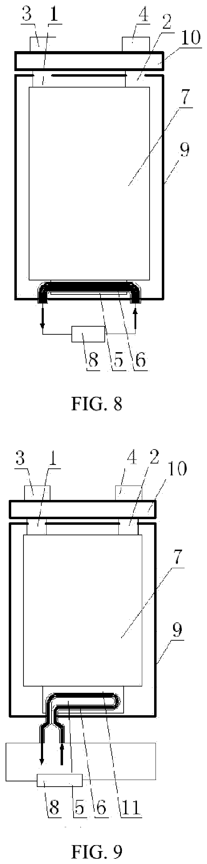

Referring to FIG. 8, the positive electrode tab and the negative electrode tab are disposed at the same end. The heat conducting and collecting bodies 5 are disposed at the sides of the positive electrode tab and the negative electrode tab. The heat conducting and collecting bodies 5 can be disposed on the positive electrode plate or the negative electrode plate. The heat conducting and collecting bodies 5 are stacked together to form the heat converging path 11. The fluid-containing pipe 6 is disposed on the heat converging path 11. The fluid-containing pipe 6 is inserted into a side of the bottom end of the metallic casing 9, and exits from another side of the bottom end of the metallic casing 9. The heat exchanging device 8 outside the casing 9 and the fluid-containing pipe 6 cooperatively form a complete energy cycle.

Referring to FIG. 9, the positive electrode tab and the negative electrode tab are disposed at the same end. The heat conducting and collecting bodies 5 are disposed at the sides of the positive electrode tab and the negative electrode tab. The heat conducting and collecting bodies 5 can be disposed on the positive electrode plate or the negative electrode plate. The heat conducting and collecting bodies 5 are stacked together to form the heat converging path 11. The fluid-containing pipe 6 is disposed on the heat converging path 11. The fluid-containing pipe 6 is inserted into and exits from a port of the bottom end of the metallic casing 9. The inlet and the outlet of the fluid-containing pipe 6 are disposed at the same port. The heat exchanging device 8 outside the casing 9 and the fluid-containing pipe 6 cooperatively form a complete energy cycle.

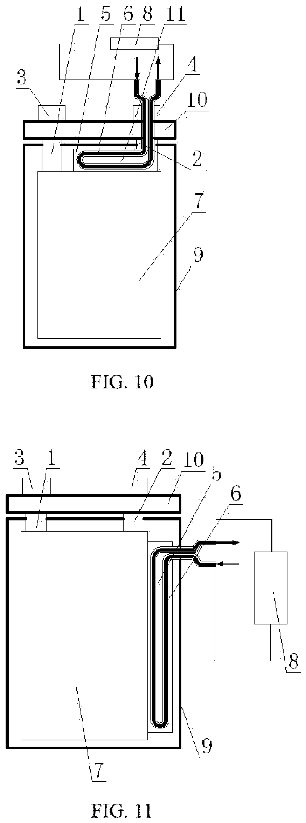

Referring to FIG. 10, the positive electrode tab and the negative electrode tab are disposed at the same end. The heat conducting and collecting bodies 5 are disposed between the positive electrode plate and the negative electrode plate, and integrally formed with the negative electrode plate. The heat conducting and collecting bodies 5 are stacked together to form the heat converging path 11. The fluid-containing pipe 6 is disposed on the heat converging path 11. The fluid-containing pipe 6 is inserted into the center the negative terminal post 4. The pipe hole of the fluid-containing pipe 6 are disposed at the positive terminal post 3 and the negative terminal post 4 (in another embodiment, the heat conducting and collecting bodies 5 are integrally formed with the positive negative electrode plate, the fluid-containing pipe 6 is inserted into the pipe hole defined in the positive terminal post 3). The heat exchanging device 8 outside the casing and the fluid-containing pipe 6 cooperatively form a complete energy cycle.

Referring to FIG. 11, the positive electrode tab and the negative electrode tab are disposed at the same end. The heat conducting and collecting bodies 5 are disposed at the side of the battery cell 7. The heat conducting and collecting bodies 5 are stacked together to form the heat converging path 11. The fluid-containing pipe 6 is disposed on the heat converging path 11. The fluid-containing pipe 6 is inserted into and exits from the side of the metallic casing 9. The heat exchanging device 8 outside the casing and the fluid-containing pipe 6 cooperatively form a complete energy cycle.

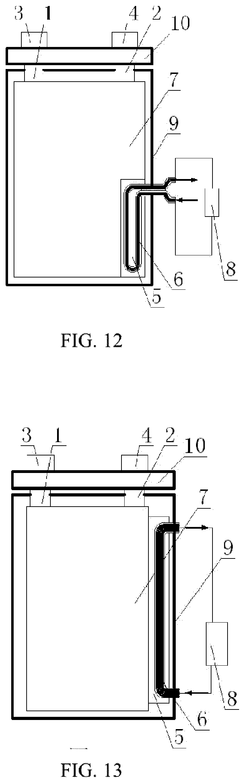

Referring to FIG. 12, the positive electrode tab and the negative electrode tab are disposed at the same end. The heat conducting and collecting bodies 5 are disposed at the side of the battery cell 7, and are recessed with respect to the electrode plates. The heat conducting and collecting bodies 5 are stacked together to form the heat converging path 11. The fluid-containing pipe 6 is disposed on the heat converging path 11. The fluid-containing pipe 6 is inserted into and exits from the side of the metallic casing 9. The heat exchanging device 8 outside the casing and the fluid-containing pipe 6 cooperatively form a complete energy cycle.

Referring to FIG. 13, the positive electrode tab and the negative electrode tab are disposed at the same end. The heat conducting and collecting bodies 5 are disposed at a side of the battery cell 7. The heat conducting and collecting bodies 5 are stacked together to form the heat converging path 11. The fluid-containing pipe 6 is disposed on the heat converging path 11. The inlet of the fluid-containing pipe 6 is inserted into the side of the metallic casing 9. The inlet and the outlet of the fluid-containing pipe 6 are disposed at different positions of the metallic casing 9. The heat exchanging device 8 outside the casing and the fluid-containing pipe 6 cooperatively form a complete energy cycle.

Implementations of the above disclosure will now be described by way of embodiments only. It should be noted that devices and structures not described in detail are understood to be implemented by the general equipment and methods available in the art.

It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

## Claims

1. A lithium-ion power battery comprising:
at least one battery cell, a metallic casing for receiving the battery cell, an electrolyte injected into the metallic casing, and a top cover connected to the metallic casing, the battery cell comprising a positive electrode plate, a negative electrode plate, and a separator spaced between the positive electrode plate and the negative electrode plate, the positive electrode plate, the separator, and the negative electrode plate sequentially laminated together and then wound together to form the battery cell, the positive electrode plate comprising a positive electrode tab, the negative electrode plate comprising a negative electrode tab, the top cover comprising a positive terminal post electrically connected to the positive terminal tab and a negative terminal post electrically connected to the negative electrode tab, the negative electrode plate comprising a negative current collector and a negative active material layer coated on the negative current collector, the positive electrode plate comprising a positive current collector and a positive active material layer coated on the positive current collector, **characterized in that**:
heat conducting and collecting bodies are formed on the positive electrode plate and the negative electrode plate, each of the heat conducting and collecting bodies being a portion of the positive current collector which is not coated by the positive active material layer or a portion of the negative current collector which is not coated by the negative active material layer;
the at least two heat conducting and collecting bodies are stacked together to form at least one heat converging path, which being configured to transmit heat energy into or out of the battery cell, a fluid-containing pipe is connected to the heat converging path, a connector is disposed at each of an inlet and an outlet of the fluid-containing pipe, the connector protrudes.

2. A lithium-ion power battery comprising a battery cell, a metallic casing for receiving the battery cell, an electrolyte injected into the metallic casing, and a top cover connected to the metallic casing, the battery cell comprising a positive electrode plate, a negative electrode plate, and a separator spaced between the positive electrode plate and the negative electrode plate, the positive electrode plate, the separator, and the negative electrode plate sequentially laminated together and then wound together to form the battery cell, the positive electrode plate comprising a positive electrode tab, the negative electrode plate comprising a negative electrode tab, the top cover comprising a positive terminal post electrically connected to the positive terminal tab and a negative terminal post electrically connected to the negative electrode tab, the negative electrode plate comprising a negative current collector and negative active material layers coated on the negative current collector, the positive electrode plate comprising a positive current collector and positive active material layers coated on the positive current collector, **characterized in that**: heat conducting and collecting bodies are formed on the positive electrode plate and the negative electrode plate, each heat conducting and collecting body is a portion of the positive current collector not coated by the positive active material layer or a portion of the negative current collector not coated by the negative active material layer, the at least two heat conducting and collecting bodies stacked together to form at least one heat converging path, which is configured to transmit heat energy into or out of the battery cell, a fluid-containing main pipe disposed on the metallic casing or the top cover, a fluid-containing branched pipe thermally connected to one, two, three, four or more than four battery cells.

3. A lithium-ion power battery comprising a battery cell, a metallic casing for receiving the battery cell, an electrolyte injected into the metallic casing, and a top cover connected to the metallic casing, the battery cell comprising a positive electrode plate, a negative electrode plate, and a separator spaced between the positive electrode plate and the negative electrode plate, the positive electrode plate, the separator, and the negative electrode plate sequentially laminated together and then wound together to form the battery cell, the positive electrode plate comprising a positive electrode tab, the negative electrode plate comprising a negative electrode tab, the top cover comprising a positive terminal post electrically connected to the positive terminal tab and a negative terminal post electrically connected to the negative electrode tab, the negative electrode plate comprising a negative current collector and negative active material layers coated on the negative current collector, the positive electrode plate comprising a positive current collector and positive active material layers coated on the positive current collector, **characterized in that**: heat conducting and collecting bodies are formed on the positive electrode plate and the negative electrode plate, each heat conducting and collecting body is a portion of the positive current collector not coated by the positive active material layer or a portion of the negative current collector not coated by the negative active material layer, the at least two heat conducting and collecting bodies stacked together to form at least one heat converging path, which is configured to transmit heat energy into or out of the battery cell, a fluid-containing pipe disposed on the heat converging path of each battery cell, a heat exchanging device is disposed on the heat converging path.

4. The lithium-ion soft battery of any one of claims 1-3, wherein the heat conducting and collecting bodies are connected to form the heat converging path by welding, bolting, or riveting, the heat conducting and collecting bodies are bent towards each other to form the heat converging path, the heat conducting and collecting bodies are bent to be inclined with the positive electrode plate or the negative electrode plate by an angle between 0 degree to 90 degrees, the heat conducting and collecting bodies are bent toward a single direction.

5. The lithium-ion soft battery of any one of claims 1-3, wherein the heat conducting and collecting bodies are bent toward opposite directions.

6. The lithium-ion soft battery of claim 5, wherein a portion of each of the heat conducting and collecting bodies is bent, and the portion which is bent is connected to a remaining portion of the heat conducting and collecting bodies, the remaining portion of each of the heat conducting and collecting bodies is straight, the portion is bent toward a single direction or opposite directions.

7. The lithium-ion soft battery of any one of claims 1-3, wherein at least a portion of each of the heat conducting and collecting bodies defines a plurality of holes or a concave and convex surface, the holes pass through the heat conducting and collecting body and have a 3D internal structure, or at least one of the heat conducting and collecting bodies, which define a plurality of holes or a concave and convex surface, are disposed among the other heat conducting and collecting bodies, the holes pass through the heat conducting and collecting body and have a mesh structure or a 3D internal structure, or at least one of the heat conducting and collecting bodies, which define a plurality of holes or a concave and convex surface, are disposed among the other heat conducting and collecting bodies, the holes pass through the heat conducting and collecting body and have a mesh structure or a 3D internal structure.

8. The lithium-ion soft battery of any one of claims 1-3, wherein each of the heat conducting and collecting bodies comprises an insulating layer, an insulating and heat conductive layer, or an insulating film on a surface thereof.

9. The lithium-ion soft battery of any one of claims 1-3, wherein the fluid-containing pipe comprises an insulating layer or an insulating film disposed on a surface thereof.

10. The lithium-ion soft battery of any one of claims 1-3, wherein the heat conducting and collecting bodies protrude from the positive electrode plate, and portions of the heat conducting and collecting bodies which protrude from the positive electrode plate are inserted into an electrolyte in the battery casing.

11. The lithium-ion soft battery of claim 10, further comprising a heat exchanging device disposed in the electrolyte for heating or cooling the electrolyte.

12. The lithium-ion soft battery of any one of claims 1-3, wherein the heat conducting and collecting bodies are recessed with respect to the negative electrode plate, a thickness of an entirety of each of the heat conducting and collecting bodies is same as of a thickness of the interconnecting portion.

13. The lithium-ion soft battery of any one of claims 1-3, wherein an end of the battery is totally the exposing current collector, the exposing current collector covers a central portion of the positive active material layer and a central portion the negative active material layer.

14. The lithium-ion soft battery of any one of claims 1-3, wherein a temperature sensor is disposed on the heat converging path.

15. The lithium-ion soft battery of claim 1, wherein the lamination is composite lamination or a bag or a thin lamination.

16. The lithium-ion soft battery of any one of claims 1-3, wherein the fluid-containing pipe comprises a second insulating layer disposed on an inner wall of the fluid-containing pipe and-or a joint.

17. The lithium-ion soft battery of claim 1, wherein the fluid-containing pipe comprises a second insulating layer disposed on an outer wall of the fluid-containing pipe.

18. The lithium-ion soft battery of claim 1, wherein the fluid-containing pipe is a pipe containing air conditioning refrigerant or a heat pipe.

19. The lithium-ion soft battery of claim 1, further comprising a plurality of fins disposed in the fluid-containing pipe.
